# EUROPEAN PATENT APPLICATION

(11) **EP 4 693 029 A1**
(43) Date of publication of application: **11.02.2026**
(21) Application number: 25192318.1
(22) Date of filing: 29.07.2025
(51) Int. Cl.: G06F 9/30

(54) **SYSTEMS AND METHODS FOR DATA TRUNCATION**

(30) Priority: 05.08.2024 US 202463679539 P; 06.05.2025 US 202519200436
(71) Applicant: Samsung Electronics Co., Ltd., Suwon-si, Gyeonggi-do 16677 (KR)
(72) Inventor: GAGNON, Garrett Robert, San Jose, CA, 95134 (US); KANG, Yangwook, San Jose, CA, 95134 (US); MALLA, Srikanth, San Jose, CA, 95134 (US)
(74) Representative: Kuhnen & Wacker Patent- und Rechtsanwaltsbüro PartG mbB

(57) **Abstract**

Systems and methods for data truncation are disclosed. A computing system may a storage medium (104, 106) and a processor (102). The processor (102) may be configured to identify first data of a first data structure; identify a first portion (304a) of the first data and a second portion (304b) of the first data; store the first portion (304a) of the first data as a second data structure in the storage medium (104, 106), and the second portion (304b) of the first data as a third data structure in the storage medium (104, 106); identify a request for the first data; based on the request, retrieve from the storage medium (104, 106) the second data structure including the first portion (304a) of the first data; identify a value associated with the second portion (304b); generate second data based on the first portion (304a) and the value; and perform a task based on the second data.

## Description

### FIELD

One or more aspects of embodiments according to the present disclosure relate to memory systems, and more particularly to achieving different precisions of a same value through data truncation.

### BACKGROUND

Applications may perform computations on large amounts of data. As such types of computations increase, it may be desirable to employ efficient and cost-effective data processing solutions.

The above information disclosed in this Background section is only for enhancement of understanding of the background of the present disclosure, and therefore, it may contain information that does not form prior art.

### SUMMARY

One or more embodiments of the present disclosure are directed to a computing system including a storage medium and a processor. The processor may be configured to identify first data of a first data structure; identify a first portion of the first data and a second portion of the first data; store the first portion of the first data as a second data structure in the storage medium, and the second portion of the first data as a third data structure in the storage medium; identify a request for the first data; based on the request, retrieve from the storage medium the second data structure including the first portion of the first data; identify a value associated with the second portion; generate second data based on the first portion and the value; and perform a task based on the second data.

In some embodiments, the processor being configured to identify the first portion of the first data and the second portion of the first data includes the processor being configured to fragment the first data at a truncation point.

In some embodiments, the first portion includes a first set of bits of the first data, and the second portion includes a second set of bits of the first data, wherein the first set of bits have a higher positional value than the second set of bits.

In some embodiments, the processor being configured to identify the value associated with the second portion includes the processor being configured to identify an attribute related to the first data.

In some embodiments, the processor being configured to identify the value associated with the second portion includes the processor being configured to: identify the attribute related to the first data as being of a first type; and based on identifying the first type of the attribute, retrieve the third data structure storing the second portion of the first data from the storage medium, wherein the value is based on the second portion of the first data.

In some embodiments, the processor being configured to identify the value associated with the second portion includes the processor being configured to: identify the attribute related to the first data as being of a first type; and based on identifying the first type of the attribute, set the value to a preset value.

In some embodiments, the processor being configured to identify the value associated with the second portion includes the processor being configured to: identify third data; perform a second task based on third data; and identify the value based on performing the second task.

In some embodiments, the value is different than a second value of the first data in the second portion.

In some embodiments, the processor is configured to: identify third data stored in a fourth data structure; identify a third portion of the third data and a fourth portion of the third data; generate a first block of data including the first portion and the third portion; store the first block of data as the second data structure; generate a second block of data including the second portion and the fourth portion; and store the second block of data as the third data structure.

In some embodiments, a size of the first block of data and a size of the second block of data is based on an amount of data transferred by the storage medium in one transaction.

One or more embodiments of the present disclosure are directed to a method that includes: identifying first data of a first data structure; identifying a first portion of the first data and a second portion of the first data; storing the first portion of the first data as a second data structure in a storage medium, and the second portion of the first data as a third data structure in the storage medium; identifying a request for the first data; based on the request, retrieving from the storage medium the second data structure including the first portion of the first data; identifying a value associated with the second portion; generating second data based on the first portion and the value; and performing a task based on the second data.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a computing system for truncating data and retrieving the truncated data at multiple levels of precision according to one or more embodiments;
FIG. 2 depicts a block diagram of a memory controller according to one or more embodiments;
FIG. 3 depicts a conceptual layout diagram of a data element that undergoes a data truncation and repackaging process according to one or more embodiments;
FIG. 4 depicts a block diagram of a process for handling a write command from an application according to one or more embodiments; and
FIG. 5 depicts a block diagram of a process for processing a read command from an application according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

Many modern workloads, such as workloads that perform computations by machine learning and artificial intelligence (AI) applications, may require large amounts of data to be processed. For example, large matrices (e.g., key and value matrices) may be computed when generating tokens for self-attention by a large language model (LLMs). Advancement of computing power may allow large amounts of data to be processed at high speeds. In order to process the data, the data is first retrieved from memory. In many situations, computational speed of processors may outpace the speed at which the data can be retrieved from memory. Thus, the workloads may be memory bound. In this regard, the speed at which the data is retrieved from memory may become a bottleneck that decreases the overall computational throughput. It may be desirable to increase the speed of memory retrieval of data to improve the overall speed and efficiency of computing technology.

One or more embodiments of the present disclosure are directed to improving memory throughput by allowing data to be retrieved at two or more (multiple) levels of precision. Data retrieved at a relatively high level of precision may result in more bits of the data being retrieved and may thus have high fidelity. Data retrieved at a relatively lower level of precision may result in fewer bits of the data being retrieved, which may allow for faster retrieval, but at a lower fidelity. There may also be power savings due to decrease in data movement. However, there may be situations in which data retrieved at the lower level of precision maintains an adequate level of accuracy (e.g., has limited accuracy impact), or even suffers no loss in accuracy at all. In those cases, the increase in throughput and cost savings due to use of less power that may result from the retrieval of fewer bits of data may make up for any loss in the accuracy of the lower precision data. Thus, it may be advantageous to control and change the level of precision at which data can be retrieved from a memory device.

One way to implement a multi-precision system may include storing multiple precisions of the data in memory. For example, the memory may store both a full precision data as well as a lower precision data, increasing the amount of memory that is used. A selection mechanism may select between the full precision data and the lower precision data for performing a computation.

In another implementation, the original data may be sparsified to reduce the size of the original data. Sparsifying the data may involve predictions of data that will not be required, and removing the selected data from the original data. Once the data is removed, it may not be recoverable. Thus, accuracy of computations using the sparsified data may depend on the accuracy of the predictions. Performing computations using the sparsified data may also include additional processing overhead, such as merging the sparse data with additional data prior to use of the data to perform a computation.

In general terms, one or more embodiments of the present disclosure are directed to systems and methods for truncating data and retrieving the truncated data at multiple levels of precision. In some embodiments, data is truncated, fragmented, or split into two or more portions, and the portions are separately stored in the memory. For example, an 8-bit data item may be split into two portions, each having 4 bits. In some embodiments, a group of data elements or items (used interchangeably herein) may undergo the truncating step. Corresponding portions of the truncated data of the various data elements may be identified and combined together into a block of data. The size of the block may depend on the granularity of data that can be transferred by the memory device at a time (e.g., in a single transaction).

In some embodiments, one or more of the split portions of the data is retrieved by a workload for performing a computation using the retrieved portions. The portions that are retrieved from the memory may depend on the level of precision identified for the data. In some embodiments, if the data is to be retrieved at a first precision level (e.g., a high or full precision level), all the split portions of the data are retrieved and returned to the workload. If the data is to be retrieved at a second precision level (e.g., a precision level other than the full precision level), a proper subset of the split portions of the data (e.g., less than all the split portions of the data) are retrieved and returned to the workload.

In the above example where data is split into two portions, both the first and second portions of the data are retrieved to return the data at the full precision level, and only the first portion of the data (e.g., the 4 highest value bits of data) is retrieved to return the data at the lower precision level. In this example, the amount of data that is retrieved decreases by half when the second precision level is selected, which may increase the throughput by a factor of 2.

In some embodiments, in order to minimize the error that may be introduced by retrieving data at the lower precision level, an adjustment value is added to the retrieved data to take the place of the dropped bits. In some embodiments, the adjustment value is determined via statistical analysis of data trends, via a feedback driven profiling on smaller workloads, and/or the like.

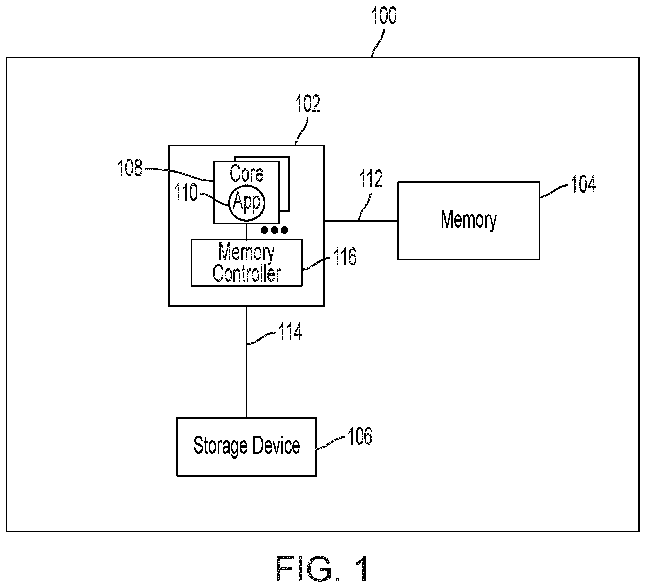

FIG. 1 depicts a block diagram of a computing system 100 for truncating data and retrieving the truncated data at multiple levels of precision according to one or more embodiments. The system 100 may include a processor 102, memory 104, and a storage device 106. The processor 102 may include a general purpose or special purpose central processing unit (CPU) or CPU core 108 configured to run one or more programs or applications 110 based on instructions stored in the memory 104. In some embodiments, the processor 102 may also be embodied (or may include) integrated circuits, application specific integrated circuits (ASICs), field programmable gate arrays (FPGAs), programmable logic arrays (PLAs), graphics processing units (GPUs), tensor processing units, co-processors, microcontrollers, and/or the like.

In some embodiments, the memory 104 may include (or may be) volatile memory, such as, for example, a dynamic random access memory (DRAM) that stores computer program instructions for execution by the processor 102, and/or stores other types of data, but the present disclosure is not limited thereto, and the memory 104 may include any suitable kind of volatile and/or non-volatile memory. For example, the memory 104 may be (or may include) read only memory (ROM), random access memory (RAM), high bandwidth memory (HBM), and/or the like. In some embodiments, the processor 102 accesses the memory 104 over a system bus 112.

The application 110 may be any application configured to perform a workload. For example, the application 110 may be a big data analysis application, e-commerce application, database application, machine learning application, and/or the like. In some embodiments, the application includes a large language model (LLM) that generates tokens for self-attention, although embodiments are not limited thereto. For example, the application 110 may include a generalized machine learning model that computes weights during training of the machine learning model. The workload executed by the application 110 (e.g., for self-attention) may transmit requests (e.g., data read or load requests) to the memory 104 or storage device 106 to perform a task (e.g., a computation) using the retrieved data. A result of the task may be used by the application 110 to generate an output. For example, if the application 110 is an LLM, the output may be recommended text based on received input text.

In some embodiments, the processor 102 sends and receives data to and from the storage device 106 over a data communications link 114. The data communications link 114 may include various general-purpose interfaces such as, for example, Ethernet, Universal Serial Bus (USB), and/or any wired or wireless data communication link. In some embodiments, an interface protocol such as, for example, a Compute Express Link (CXL) protocol is used for communication between the processor 102 and the storage device 106, although embodiments are not limited thereto. For example, in addition or in lieu of CXL, the processor 102 may communicate with the storage device 106 using other protocols such as Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

In some embodiments, the storage device 106 is a secondary memory device such as, for example, a solid state drive (SSD). In some embodiments, the storage device 106 is implemented as a computational storage device (for example, an SSD with an embedded processor or Field Programmable Gate Array (FPGA)). However, the present disclosure is not limited thereto, and in some embodiments, the storage device 106 may include (or may be) any suitable storage device, such as, for example, a magnetic storage device (e.g., a hard disk drive (HDD), and the like), an optical storage device (e.g., a Blue-ray disc drive, a compact disc (CD) drive, a digital versatile disc (DVD) drive, and the like), other kinds of flash memory devices (e.g., a USB flash drive, and the like), and/or the like.

In some embodiments, the processor includes a memory controller 116 configured to manage the writing and reading of data to and from the memory 104. In this regard, the memory controller 116 may receive read or write instructions from the application 110, and identify a physical address of the memory 104 in which to read or write the data. The data may include, for example, one or more elements (e.g., one or more keys and values) of an array, matrix, tensor, and/or other data structure. The data may be generated by the application 110 (e.g., a machine learning model) during execution of a workload.

In some embodiments, the memory controller 116 splits, fragments, separates, or truncates the data that is subject of a write command, into at least a first portion (or group) and a second portion (or group). In some embodiments, the splitting of the data results in the decoupling of data significance that separates the relative impact (or "significance") of bits between segments of values.

The splitting of the data may include truncating the initial data item at a truncation point, and storing the truncated data as a separate data structure (e.g., a separate matrix) in the memory 104. For example, if the data includes an 8-bit floating point or integer datatype element, the memory controller 116 may split the data so that the first portion includes 4 bits of data with the highest positional or place values (e.g., the 4 most significant bits of the element), and the second portion includes 4 bits of data with the lowest positional or place values (e.g., the 4 least significant bits of the element). Of course, this is a simplified example that illustrates a basic scenario. A person of skill in the art should recognize that a data item may be split into any number of groups or portions, and stored in the memory 104 for retrieval at any number of precision levels that may be suitable for the number of portions.

In some embodiments, the data portions are stored in association with one or more memory channels of the memory 104. For example, a first portion of the data may be stored in a first portion of the memory 104 associated with a first channel or interface (e.g., a first pseudo or virtual channel) of the memory 104, and the second portion of the data may be stored in a second portion of the memory 104 associated with a second channel (e.g., a second pseudo or virtual channel) of the memory 104. In some embodiments, each pseudo channel is associated with one or more rows. In this example, a first group of bits is stored in a first row of the first pseudo-channel, and a second group of bits is stored in a first row of the second pseudo-channel. The storing of the data according to this structure may allow the data item to be retrieved at a first precision level (e.g., a high or full precision level) which includes the first portion and the second portion of data, or at a second precision level (e.g., a lower precision level) which includes (e.g., only includes) the first portion of data.

In some embodiments, the memory controller 116 processes a read command from the application 110 for a data item that is stored in the memory 104 in split form. The data item may be for performing a task (e.g., a computation) by the application 110. The memory controller 116 may process the read command by identifying a precision level at which the requested data is to be retrieved. In some embodiments, the selected level of precision determines how many of the one or more of the separately stored portions of the data item are to be retrieved. For example, if the memory controller 116 determines that full precision is desired for the data item, all stored portions of the data item are retrieved and combined for providing to the requesting application 110. In another example, if the memory controller 116 determines that less precision is desired for the data item, the truncated portions of the data that store bits that correspond to the selected precision are retrieved without retrieving the other data portions. The memory controller 116 may add an adjustment value to the retrieved truncated data if less than the full precision data is retrieved. The adjustment value may be one that is predicted to increase accuracy of the truncated data. The retrieval of less than the full precision data according to embodiments of the present disclosure helps increase memory bandwidth while limiting the accuracy impact due to use of truncated data.

Although the various embodiments are described with respect to data portions being stored and read from the memory 104, a person of skill in the art should recognize that the embodiments may extend to scenarios where the data portions are written and loaded from the storage device 106.

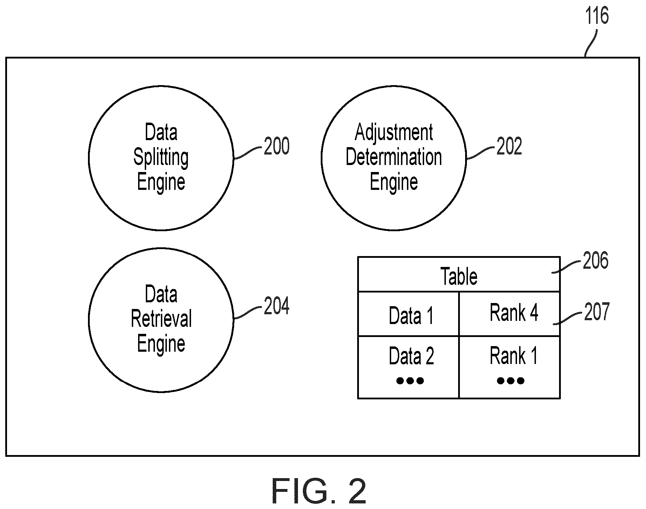

FIG. 2 depicts a block diagram of the memory controller 116 according to one or more embodiments. The memory controller 116 may include, without limitation, a data splitting engine 200, an adjustment determination engine 202, a data retrieval engine 204, and a table 206. The various engines 200-204 may be implemented via hardware, firmware (e.g., via an ASIC) and/or by a more general purpose hardware, such as a central processing unit (CPU) configured to execute instructions stored in a non-transitory storage medium. The table 206 may be stored in the memory 104, in a cache of the processor 102, and/or the like. Although the one or more engines are assumed to be separate functional units, a person of skill in the art will recognize that the functionality of the engines may be combined or integrated into a single engine, or further subdivided into further sub-engines without departing from the scope of the inventive concept.

In some embodiments, the data splitting engine 200 is configured to identify a data item that is the subject of a write command, and identify one or more truncation points in the data. The truncation points may split the data into the same or different bit quantities or bit lengths. For example, a 16-bit data item may have three truncation points that split the data into four portions of four bits each. In another example, the 16-bit data item may have two truncation points that splits the data into three portions, where the first portion has eight bits, the second portion has four bits, and the third portion also has four bits. Other portions with other bit sizes are also possible.

In some embodiments, the truncation points may be identified based on the particular type of workload. For example, workload A may benefit from divisions of 4-, 8- ,12- , and 16-bits while workload B may benefit from only 8- and 16-bit divisions. In some embodiments, the workload is configured to select the truncation points based on analysis of the work that it is configured to perform and/or types of data that it is configured to process, and inform the data splitting engine 200 accordingly.

In some embodiments, the data splitting engine 200 stores each portion of the data in the memory 104 as a separate data item. For example, in the example where the data is split into two portions, the data splitting engine 200 allocates a first memory location to the first portion and stores the first portion as a first data structure in the first memory location. The data splitting engine 200 allocates a second memory location to the second portion and stores the second portion as a second data structure in the second memory location.

The splitting and storing of data may be performed via software, firmware, hardware, or combination of software, firmware, and/or hardware. A hardware solution may entail identifying the bits of the first portion and routing them using wires connected to the first memory location, and identifying the bits of the second portion and routing them via wires connected to the second memory location. In another example, the splitting may be performed by a GPU with bit-masking of the data and shifting.

The data truncation and storing mechanism according to various embodiments of the present disclosure allow multi-precision retrieval of data without the need to store both the original data and lower precision versions of the data. In addition, unlike solutions that sparsify the data, embodiments of the present disclosure allow full precision of the data to be maintained when the data is stored.

In some embodiments, a group of data elements are selected for undergoing the data splitting process. The group of data elements may include elements of a matrix or some other data structure. A corresponding portion of the data from the various data elements in the group may be packaged together into a data block and stored into an allocated portion of the memory 104. The size of the data block may depend on the granularity of data that can be read by the memory 104 in a single read transaction. For example, a first 8-bit data item may be split into a first portion and a second portion, and a second 8-bit data item may also be split into a third portion and a fourth portion. The first portion and the third portion may each include 4 bits of data with the highest place values, and the second portion and the fourth portion may each include 4 bits of data with the lowest place values. The first and third portions of the first and second data items may be packaged together into a first data block and stored in a first memory location of the memory 104. The second and fourth portions of the first and second data items may be packaged together into a second data block and stored in a second memory location of the memory 104.

In some embodiments, the data splitting engine 200 stores in the table 206, information about the generated portions of data. For example, the table 206 may include a data importance or rank field 207 indicative of importance of the data item. Importance of the data item may be based, for example, on one or more workload criteria. For example, a first workload may be deemed more important than a second workload. In this case, a first data item of the first workload may be assigned a rank that is higher than the rank of a second data item associated with the second workload. In this manner, the first data item may be retrieved at a higher precision than the second data item. The importance of a workload may be based on the magnitude of the value of the associated data item, historical significance of the workload, predicted significance of the workload, and/or other workload characteristics.

The data retrieval engine 204 is configured to process read commands from an application 110. The application 110 may transmit a read command to retrieve a data item to perform a task (e.g., a computation) associated with a workload. The requested data item may be data that is stored in the memory 104 in split form. The data retrieval engine 204 is configured to select a precision level at which the requested data is to be retrieved, and retrieve the data based on the selected precision level. The number of precision levels in which the data may be retrieved may depend on the number of portions in which the data has been split. For example, if the data has been split into two portions, the data may be retrieved at one of two precision levels (e.g., a full precision level and a low precision level). For example, if the data has been split into three portions, the data may be retrieved at one of three precision levels (e.g., a full precision level, an intermediate precision level, and a low precision level).

The data retrieval engine 204 may retrieve an appropriate number of data portions of the data item based on the selected precision level. Because the data portions are stored independently of one other in separate data structures, the different portions of the data are retrieved in separate data read transactions. In the example where the data item is retrieved in the full precision level, all three data portions may be separately retrieved and combined together to generate the combined data that is returned to the requesting application. For the intermediate precision level, the top and middle portions of the data are retrieved, combined with an adjustment value (e.g., a middle precision adjustment value), and returned to the requesting application. The top portion may contain one or more of the highest placement bits of the original data, and the middle portion may store one or more bits below the highest placement bits. For the low precision level, the top portion of the data is retrieved, combined with an adjustment value (e.g., a low precision adjustment value), and returned to the requesting application. In some embodiments, one or more of the data portions are stored in a same memory device (e.g., the memory 104 or the storage device 106). In some embodiments, one or more of the data portions are stored in different memory devices

In some embodiments, the various portions are efficiently retrieved and combined using a hardware combiner unit as described in further detail in U.S. Application entitled "Systems and Methods for Multi-Precision Memory Retrieval," filed on even date herewith.

The adjustment value may be identified by the adjustment determination engine 202. In the scenario where less than all the data items are retrieved, the adjustment value may take the place of the portion of the data that is not retrieved (e.g., the dropped bits of the original data). In this regard, the adjustment value may be a predetermined value used to lengthen the retrieved data to an expected number of bits. The expected number of bits may be the number of bits that are transferred by the memory 104 in a single data transfer transaction. In some embodiments, the adjustment value is a preset static value retrieved from register memory. In some embodiments, the adjustment value is a value that is randomly selected at runtime. In some embodiments, the adjustment value is a predicted or learned adjustment value based on example tasks.

In some embodiments, a separate adjustment value is selected depending on the portion of the dropped bits that is to be replaced by the adjustment value. For example, if the data split into top, middle, and bottom portions, a first adjustment value may be identified for replacing the bits corresponding to the middle and bottom portions when only the top portion is retrieved. A second adjustment value may be identified for replacing the bits corresponding to the bottom portion when both the top and middle portions are retrieved. In some embodiments, an identified adjustment value changes on a periodic (regular or irregular) basis. For example, the adjustment value may change in response to stimuli such as expected error, as different workloads accumulate error differently. For example, two separate workloads may have separate expected errors resulting in different adjustment values. In a machine learning context, the adjustment value may differ depending on the specific type of model, where one adjustment value may make the model more accurate than another adjustment value.

In some embodiments, a profiling algorithm is configured to identify an adjustment value based on example tasks. The identified adjustment value may be one that is predicted to have a lessened (e.g., least) impact on accuracy of computations performed using the adjustment value. In some embodiments, the adjustment value may be determined during a profiling stage that executes one or more test or example workloads. The profiling stage may occur prior to an execution stage of workloads from the application. During the profiling stage, test adjustment values may be added to the truncated data that is retrieved in less than a full precision level, and used to execute the one or more example workloads. The example workloads may include low-computing computations, such as computations using shorter sequences or lower dimensions than a typical workload executed by the application 110.

The test adjustment values may be selected randomly, selected based on a selection pattern, and/or the like. For example, the selection pattern may be to increase the test adjustment value by a set amount (e.g., by a value of 8) for each iteration of the test. Different test adjustment values may be tested until a criterion is satisfied. The criterion may be satisfied after a preset number of test adjustment values have been assessed. In another example, the criterion may be satisfied when a change in error is zero or when a maximum has been identified.

The final adjustment value may be selected based on performance of the sample workloads using the test adjustment values. Performance of the sample workloads may include accuracy of an output of the workloads. For example, the closer the output of the workload that uses truncated data adjusted by the test adjustment value, to the output of the workload using the untruncated data, the higher the performance of the workload. In some embodiments, the test adjustment value with the highest performance is selected as the final adjustment value.

In some embodiments, the adjustment value is selected based on statistical expectation of loss via truncation. In this regard, the adjustment determination engine 202 analyzes data trends and computes the expected value of the dropped bits. For example, when there are a set of values v = {a,b,c,...}, the elements of v may be truncated, with the truncated bits being placed in set t. The average of t could be computed and used as an adjustment value for the workload. The expected values may be set as the final adjustment value.

In some embodiments, the adjustment value is one that minimizes a mean-square error of fetched data (e.g., key value data). For example, the fetched data may include full precision data that is stored in a KV-cache of a machine learning model.

In some embodiments, the adjustment value may be updated on a periodic (regular or irregular) basis. For example, the adjustment value may be updated when there is a change in a workload or task executed by the application 110.

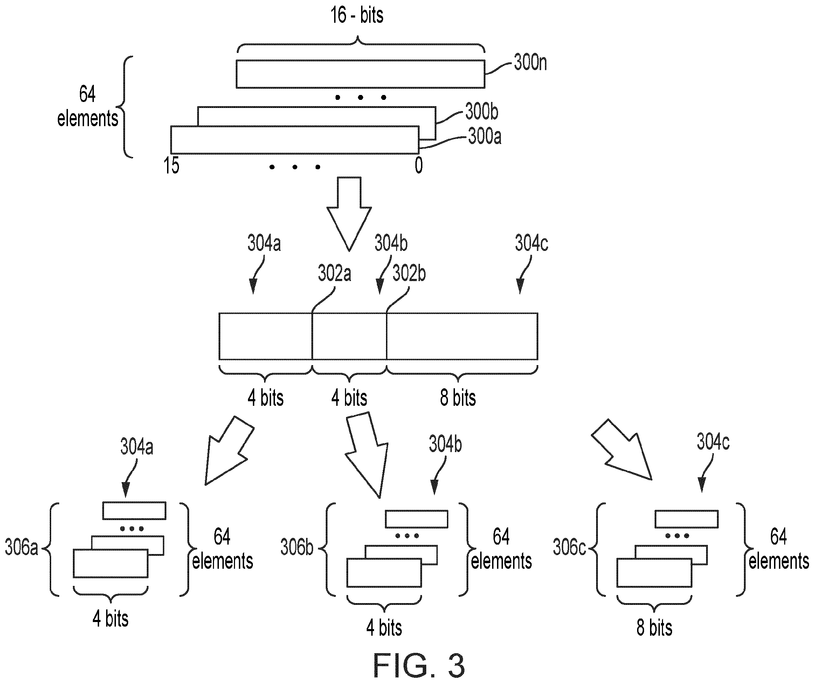

FIG. 3 depicts a conceptual layout diagram of a data element that undergoes a data truncation and repackaging process according to one or more embodiments. In the example of FIG. 3, a group of data items elements 300a-300n (collectively referenced as 300), with each data element including 16 bits of data, are provided to the memory controller 116. In the example of FIG. 3 it is assumed that the group consists of 64 data elements of one or more matrices, although embodiments are not limited thereto.

The data splitting engine 200 may split a data element 300 at one or more truncation points 302a-302b (collectively referenced as 302). For example, the data splitting engine 200 may concurrently split one or more of the data elements (e.g., each element), although embodiments are not limited thereto. The truncation points 302 may be preset to generate a split portion 304a-304c (collectively referenced as 304) having a certain number of bits. In the example of FIG. 3, the truncation points 302 are set so that the first portion 304a stores four highest placement bits of the data element 300, a second portion 304b stores four medium placement bits of the data element 300, and a third portion 304c stores eight low placement bits of the data element 300.

In some embodiments, the data splitting engine 200 identifies the first portion 304a of one or more of the data elements (e.g., the 64 data elements), and packages the first portions 304a into a first data block 306a (e.g., a first matrix). In the example of FIG. 3, the first data block 306a stores four highest placement bits of each of the 64 data elements in a single data block, to generate a first data block having 256 bits. The size of the first data block may be selected to correspond to the amount of data that may be transferred by the memory 104 in a single transfer transaction (e.g., in a single burst).

Similarly, in the example of FIG. 3, the data splitting engine 200 identifies the second portion 304b of one or more of the data elements (e.g., the 64 data elements), and packages the second portions 304b into a second data block 306b (e.g., a second matrix). The second data block 306b may store four medium placement bits of each of the 64 data elements in a single data block, to generate a second data block having 256 bits.

In the example of FIG. 3, the third portion 304c of the one or more of the data elements include 8 low placement bits of data. The third portions of the data elements are packaged into third and fourth data blocks 306c (e.g., a third and fourth matrix), each having 256 bits. In the example of FIG. 3, packaging 8 bits of the third portion 304c for 64 data elements results in 512 bits. Thus, the 512 bits are stored into two blocks of 256 bits each, to match the granularity of the memory transfers.

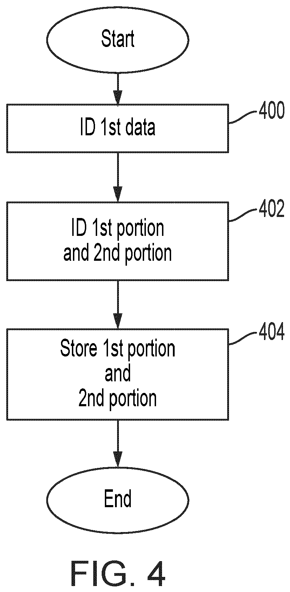

FIG. 4 depicts a block diagram of a process for handling a write command from an application 110 according to one or more embodiments. The process starts, and in act 400, the data splitting engine 200 identifies a first data associated with a first data structure. The first data may be, for example, a data element of a matrix.

In act 402, the data splitting engine 200 identifies a first portion of the first data and a second portion of the first data. In this regard, the data splitting engine 200 may identify one or more truncation points (e.g., based on workload and/or data type), and fragment the first data based on the identified truncation points. The first portion may include a first set of bits of the first data, and the second portion includes a second set of bits of the first data. In some embodiments, the first set of bits have a higher positional value than the second set of bits.

In act 404, the data splitting engine 200 stores the first portion as a second data structure (e.g., a second matrix) in a first memory location of a storage medium (e.g., the memory 104), and the second portion as a third data structure (e.g., a third matrix) in a second memory location of the storage medium. In storing the first portion, the data splitting engine 200 may be configured to identify first portions of other data elements for packaging the identified first portions into a first data block. The first data block may be stored in the first memory location. In storing the second portion, the data splitting engine 200 may be configured to identify second portions of other data elements for packaging the identified second portions into a second data block. The second data block may be stored in the second memory location. In some embodiments, the size of the data blocks may be based on an amount of data transferred by the storage medium in one transaction (e.g., in one burst).

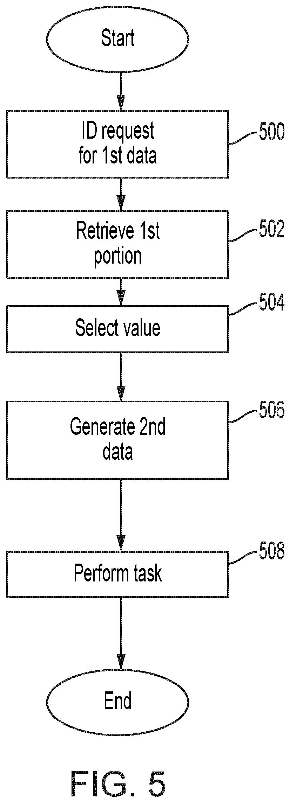

FIG. 5 depicts a block diagram of a process for processing a read command from an application 110 according to one or more embodiments. The process starts, and in act 500, the data retrieval engine 204 identifies a request for first data. The data request may be, for example, a read request for data elements in a first data structure that have been split into a first portion and a second portion, and stored in the storage medium as respectively a second data structure and a third data structure. The first portion may include bits that have a higher positional value than the bits in the second portion.

In act 502, the data retrieval engine 204 retrieves the first portion storing the higher positional bits, and determines a precision level for retrieving the first data. In some embodiments, the precision level may be based on determining an attribute related to the first data, attribute of a storage medium, and/or the like. The attribute may include importance of the first data (e.g., based on the importance rank of the first data in the table 206 of FIG. 2). For example, the higher the importance, the higher the precision level. In some embodiments, the importance rank may be based on the importance of the associated workload.

In some embodiments, the precision level may be based on determining other attributes such as, for example, bandwidth constraints of the storage medium. For example, the higher the bandwidth constraints, the lower the precision level. The bandwidth constraints may be due to the storage medium handling multiple data access requests from multiple sources. In some embodiments, the data retrieval engine 204 may weigh the attribute of the data (e.g., importance rank) and the other attributes (e.g., bandwidth constraints) to select an appropriate precision level.

In the event that less than a full precision level is selected, the data retrieval engine 204 may select, in act 504, an adjustment value for adding to the retrieved first portion (e.g., the retrieved truncated data), and generate, in act 506, second data that includes the first portion and the adjustment value. In some embodiments, the adjustment value may be added as described in U.S. Application entitled "Systems and Methods for Multi-Precision Memory Retrieval," filed on even date herewith.

The adjustment value may be provided by the adjustment determination engine 202. Of course, if a full precision level is selected, the data retrieval engine 204 may retrieve the remaining second portion of the data for combining with the first portion instead of the adjustment value.

In act 508, the data retrieval engine 204 performs a task based on the second data. The task may be, for example, a computation that uses the second data, such as, for example, a matrix multiplication. The computation may be for executing a workload such as, for example, identifying tokens for self-attention of an LLM. The LLM may output a recommended text based on the identified tokens.

As a person of skill in the art should recognize, the systems and method for truncating data and retrieving the truncated data at multiple levels of precision have one or more advantages including: 1) any prediction related to choosing the precision level may be done after the data has been stored, deferring the precision level decision until read time; 2) existing memory technology may be used to amplify performance without the need to modify the memory hardware; 3) embodiments may be used for tasks (other than computations for self-attention) where results can be approximated; and 4) embodiments may be combined with other techniques for attention acceleration (e.g. sparsity, quantization, etc.).

One or more embodiments of the present disclosure may be implemented in one or more processors. The term processor may refer to one or more processors and/or one or more processing cores. The one or more processors may be hosted in a single device or distributed over multiple devices (e.g., over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g., memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for truncating data and retrieving the truncated data at multiple levels of precision have been specifically described and illustrated herein, many modifications and variations will be apparent to those skilled in the art. Accordingly, it is to be understood that systems and methods for truncating data and retrieving the truncated data at multiple levels of precision constructed according to principles of this disclosure may be embodied other than as specifically described herein. The disclosure is also defined in the following claims, and equivalents thereof.

The systems and methods for truncating data and retrieving the truncated data at multiple levels of precision may contain one or more combinations of features set forth in the below statements.

Statement 1: A computing system comprising: a storage medium; and a processor configured to: identify first data of a first data structure; identify a first portion of the first data and a second portion of the first data; store the first portion of the first data as a second data structure in the storage medium, and the second portion of the first data as a third data structure in the storage medium; identify a request for the first data; based on the request, retrieve from the storage medium the second data structure including the first portion of the first data; identify a value associated with the second portion; generate second data based on the first portion and the value; and perform a task based on the second data.

Statement 2. The computing system of Statement 1, wherein the processor being configured to identify the first portion of the first data and the second portion of the first data includes the processor being configured to fragment the first data at a truncation point.

Statement 3. The computing system of Statement 1, wherein the first portion includes a first set of bits of the first data, and the second portion includes a second set of bits of the first data, wherein the first set of bits have a higher positional value than the second set of bits.

Statement 4. The computing system of Statement 1, wherein the processor being configured to identify the value associated with the second portion includes the processor being configured to identify an attribute related to the first data.

Statement 5. The computing system of Statement 4, wherein the processor being configured to identify the value associated with the second portion includes the processor being configured to: identify the attribute related to the first data as being of a first type; and based on identifying the first type of the attribute, retrieve the third data structure storing the second portion of the first data from the storage medium, wherein the value is based on the second portion of the first data.

Statement 6. The computing system of Statement 4, wherein the processor being configured to identify the value associated with the second portion includes the processor being configured to: identify the attribute related to the first data as being of a first type; and based on identifying the first type of the attribute, set the value to a preset value.

Statement 7. The computing system of Statement 4, wherein the processor being configured to identify the value associated with the second portion includes the processor being configured to: identify third data; perform a second task based on third data; and identify the value based on performing the second task.

Statement 8. The computing system of Statement 1, wherein the value is different than a second value of the first data in the second portion.

Statement 9. The computing system of Statement 1, wherein the processor is configured to: identify third data stored in a fourth data structure; identify a third portion of the third data and a fourth portion of the third data; generate a first block of data including the first portion and the third portion; store the first block of data as the second data structure; generate a second block of data including the second portion and the fourth portion; and store the second block of data as the third data structure.

Statement 10. The computing system of Statement 9, wherein a size of the first block of data and a size of the second block of data is based on an amount of data transferred by the storage medium in one transaction.

Statement 11. A method comprising: identifying first data of a first data structure; identifying a first portion of the first data and a second portion of the first data; storing the first portion of the first data as a second data structure in a storage medium, and the second portion of the first data as a third data structure in the storage medium; identifying a request for the first data; based on the request, retrieving from the storage medium the second data structure including the first portion of the first data; identifying a value associated with the second portion; generating second data based on the first portion and the value; and performing a task based on the second data.

Statement 12. The method of Statement 11, wherein the identifying the first portion of the first data and the second portion of the first data includes fragmenting the first data at a truncation point.

Statement 13. The method of Statement 11, wherein the first portion includes a first set of bits of the first data, and the second portion includes a second set of bits of the first data, wherein the first set of bits have a higher positional value than the second set of bits.

Statement 14. The method of Statement 11, wherein the identifying the value associated with the second portion includes identifying an attribute related to the first data.

Statement 15. The method of Statement 14, wherein the identifying the value associated with the second portion includes: identifying the attribute related to the first data as being of a first type; and based on identifying the first type of the attribute, retrieving the third data structure storing the second portion of the first data from the storage medium, wherein the value is based on the second portion of the first data.

Statement 16. The method of Statement 14, wherein the identifying the value associated with the second portion includes: identifying the attribute related to the first data as being of a first type; and based on identifying the first type of the attribute, setting the value to a preset value.

Statement 17. The method of Statement 14, wherein the identifying the value associated with the second portion includes: identifying third data; performing a second task based on third data; and identifying the value based on performing the second task.

Statement 18. The method of Statement 11, wherein the value is different than a second value of the first data in the second portion.

Statement 19. The method of Statement 11 further comprising: identifying third data stored in a fourth data structure; identifying a third portion of the third data and a fourth portion of the third data; generating a first block of data including the first portion and the third portion; storing the first block of data as the second data structure; generating a second block of data including the second portion and the fourth portion; and storing the second block of data as the third data structure.

Statement 20. The method of Statement 19, wherein a size of the first block of data and a size of the second block of data is based on an amount of data transferred by the storage medium in one transaction.

## Claims

1. A method comprising:
identifying first data of a first data structure;
identifying a first portion (304a) of the first data and a second portion (304b) of the first data;
storing the first portion (304a) of the first data as a second data structure in a storage medium (104, 106), and the second portion (304b) of the first data as a third data structure in the storage medium (104, 106);
identifying a request for the first data;
based on the request, retrieving from the storage medium (104, 106) the second data structure including the first portion (304a) of the first data;
identifying a value associated with the second portion (304b);
generating second data based on the first portion (304a) and the value; and
performing a task based on the second data.

2. The method of claim 1, wherein the identifying the first portion (304a) of the first data and the second portion (304b) of the first data includes fragmenting the first data at a truncation point (302a, 302b).

3. The method of claim 1 or 2, wherein the first portion (304a) includes a first set of bits of the first data, and the second portion (304b) includes a second set of bits of the first data, wherein the first set of bits have a higher positional value than the second set of bits.

4. The method of any one of claims 1 to 3, wherein the identifying the value associated with the second portion (304b) includes identifying an attribute related to the first data.

5. The method of claim 4, wherein the identifying the value associated with the second portion (304b) includes:
identifying the attribute related to the first data as being of a first type; and
based on identifying the first type of the attribute, retrieving the third data structure storing the second portion (304b) of the first data from the storage medium (104, 106), wherein the value is based on the second portion (304b) of the first data.

6. The method of claim 4, wherein the identifying the value associated with the second portion (304b) includes:
identifying the attribute related to the first data as being of a first type; and
based on identifying the first type of the attribute, setting the value to a preset value.

7. The method of claim 4, wherein the identifying the value associated with the second portion (304b) includes:
identifying third data;
performing a second task based on third data; and
identifying the value based on performing the second task.

8. The method of any one of claims 1 to 7, wherein the value is different than a second value of the first data in the second portion (304b).

9. The method of any one of claims 1 to 8, further comprising:
identifying third data stored in a fourth data structure;
identifying a third portion of the third data and a fourth portion of the third data;
generating a first block (306a) of data including the first portion and the third portion;
storing the first block (306a) of data as the second data structure;
generating a second block (306B) of data including the second portion and the fourth portion; and
storing the second block of data as the third data structure.

10. The method of claim 9, wherein a size of the first block (306a) of data and a size of the second block (306b) of data is based on an amount of data transferred by the storage medium (104, 106) in one transaction.

11. A computing system comprising:
a storage medium (104, 106); and
a processor (102) configured to perform the method of any one of the preceding claims.
